# EUROPEAN PATENT SPECIFICATION

(11) **EP 0 452 070 B1**
(45) Date of publication and mention of the grant of the patent: **02.11.1994**
(21) Application number: 91303084.7
(22) Date of filing: 09.04.1991
(51) Int. Cl.: H01M 2/04, H01M 12/06

(54) **Stress-resistant galvanic cells and inner covers therefor**
Gegen mechanischen Spannungen beständige galvanische Zellen und Innendeckeln dafür
Cellules galvaniques présentant une résistance aux contraintes mécaniques et couvercles internes pour celles-ci

(30) Priority: 09.04.1990 US 507208
(43) Date of publication of application: 16.10.1991
(73) Proprietor: EVEREADY BATTERY COMPANY, INC., St. Louis Missouri 63164 (US)
(72) Inventor: Murphy, Katherine Ann, Medina, OH 44256 (US)
(74) Representative: Lord, Hilton David

(56) References cited:
- FR-A- 2 089 486
- US-A- 3 967 977
- US-A- 5 051 323

## Description

The present invention relates to galvanic cells and inner covers therefor.

Seals for batteries are designed to prevent the undesired passage of moisture either into or out of the cell's interior, as well as to prevent the escape of electrolyte which can damage equipment in which the cell is used.

Electrolyte can escape from the cell by several routes; two of the most common paths exist at the seal-to-can interface and the seal-to-collector interface.

Representative of an attempt to stop the leakage of electrolyte out of a cell, US-A-3,069,489 discloses a "radial squeeze seal", wherein a gasket material is tightly compressed between a metal cover for the cell and the outer metal container.

Sealants and liquid creep inhibitors such as those disclosed in US-A-3,922,178 may also be applied to the plastic/metal interface to reduce or eliminate the loss of liquid or moisture from the cell's interior.

The above seals can be used effectively to establish a satisfactory seal, but are susceptible to deterioration when exposed to significant fluctuations in temperature, relative humidity, or physical stress, such as accidental dropping of the cell by the user.

It has now been found that improved galvanic cells can be provided. These have an inner conductive member providing a terminal and which is locked in place by a resilient collar acting on inner and peripheral flanges of a seal so as to bias the flanges into position, thereby locking the assembly into place, the inner flange being compressed by securing of the inner conductive member to further secure the collar, the assembly providing a tight seal under both physical and thermal stress, the invention also providing collars as described.

Thus, in a first aspect, the present invention provides a galvanic cell comprising a conductive container containing the active materials, a non-conductive seal located in an open end of the container to retain the active materials, a conductive member extending through the seal to provide the terminal opposite to that provided by the container, characterised in that a flange of the seal extends away from the active materials about the conductive member, and/or a flange of the seal extends about the interior periphery of the container toward the open end thereof, a resiliently deformable collar being provided about the member and resilient deformation of the collar acting on at least one extending flange, preferably by means of a suitable wall on the collar, to bias the flange against the member or container as appropriate.

The container will typically have only one opening through which the various components of the cell can be assembled. The anode and cathode materials ('active' materials) are assembled into the container, followed by placing of the seal over these, to prevent their escape.

The seal may have breathing holes, especially for air-assisted cells which will typically have a manganese dioxide cathode, and such holes may be covered by a suitable air-permeable membrane to prevent escape of the cathode material while allowing breathing.

The conductive member is typically connected to the current collector, and a flange, or upstanding wall, of the seal serves to grip the member and help prevent leakage. Likewise a flange about the edge of the seal contacts the interior periphery of the container to help prevent leakage. Either flange may be continuous or discontinuous, although it is preferred that both be continuous.

Other features which may be used are well known to those in the art, and may include a further depending flange to contain the upper portion of the separator, especially in air-assisted cells.

The collar, which is also referred to herein as the inner cover, is preferably made of a resilient material. The material may be polymeric or metal, for example, and stainless steel is preferred.

The collar is located about the conductive member. While it is possible that the central aperture of the collar is such that action is only against the interior of the container, or that the collar is smaller than the interior width of the container but tightly fitting about the member, it is preferred that it acts against both the inside of the container and against the member. Where there is a flange, the collar will then act on the member or container via the flange, biassing flange and member or container together.

Where the collar is resilient, fitting it into place in the container will usually involve deformation, so that the stress on the collar serves to lock the flanges into place.

The resilience is advantageously utilised by providing a depression, preferably step-like, in the centre of the collar about the conductive member. The collar can then bow around the step-like area. The step itself may be essentially perpendicular to the general plane of the collar, but it is generally preferred that it be sloped.

The collar may be continuous or discontinuous, but a discontinuous collar may provide uneven action, and may upset the cell. Continuous collars are preferred.

It is particularly preferred to enhance the collar with a recurved outer edge. In such a conformation, the outer edge is folded first one way and then the other. Such folding may be minimal, but a preferred way is to make the folds substantially perpendicular, such that the second fold brings the edge back on itself. Alternatively, folding can be arranged that the edge is only brought back on itself in situ.

What is particularly preferred is to provide the edge of the collar in a substantially perpendicular manner so that it it can act against the outer flange of the seal over a larger area of the flange, and is less likely to cut into the flange, which could serve to destabilise the cell by losing biassing activity, which may allow movement of the seal, or by cutting away part of the seal, which could even result in the loss of electrical contact.

Preferred embodiments are as described above, as defined below and generally as described herein. The following represent some particularly preferred embodiments.

For example it is preferred that the seal has a flange both about the conductive member and the interior periphery of the container, the collar acting on both flanges.

The collar is preferably resiliently deformable and resilient deformation of the collar provides the biassing action.

Particular cells which may be used in accordance with the present invention are air-assisted cells, with appropriate holes being provided in seal and collar, there being preferably three holes in the collar substantially evenly distributed.

It is also preferred that the periphery of the collar is recurved, especially where the recurvature is such that the periphery of the collar is doubled back into contact with itself and is substantially perpendicular to the general plane of the collar.

It is preferred that the collar has a depression about the conductive member, especially wherein the radial section of the collar is substantially step-like, with the transition between the faces which define the depression and the remainder of the collar forming an acute angle, the term 'acute' including perpendicular and substantially perpendicular.

A metal collar is preferred, especially stainless steel.

It is also a particular advantage when the conductive member is a metal fastener, preferably a rivet, with the seal comprising a flange about the fastener, and whereby, when the member is fastened in position, the flange is compressed such that a part of the flange is forced outwards and over the inner periphery of the collar, preferably preventing any axial movement of the collar. Such forcing outwards will generally be bulging, although it may be by bending, and it is preferred that it serves to trap the collar against the main part of the seal. This is further advantageously achieved when the collar comprises an inner wall acting on the flange.

The present invention also provides a collar as defined.

Thus, a cell's ability to maintain an adequate seal at a plastic-to-metal interface can be greatly improved by designing the seal assembly's inner cover so that it absorbs movements in the seal assembly that are caused by temperature changes and/or physical shocks.

The seal assembly typically consists of several parts and is located over the open end of the container. The assembly contains the several internal components that make up the galvanic cell.

In one embodiment, the inner cover has a substantially flat surface portion extending inwardly from a reversed curved edge portion. The flat portion bounds a depressed or lowered portion which extends inward toward the centre of the cover and which, in turn, surrounds an upstanding wall portion which is formed about an aperture in the inner cover. The seal assembly and inner cover have substantially the same outer configuration as the inner configuration of the container.

In another embodiment, a galvanic cell is provided having a metal container for holding the active components of the galvanic cell and for forming an external electrode for the cell. A seal assembly, including a non-conductive sealing member and an inner cover is provided for the open end of the container, the sealing member having a centrally located upstanding tubular hub portion and an upstanding peripheral skirt portion for contacting the inner wall of the metal container. The inner cover has a reverse curved peripheral edge portion for compressing the up-standing skirt portion of the sealing member between the edge of the cover and the inner wall of the container. A substantially flat portion of the cover extends inwardly from the reverse curved peripheral edge. The substantially flat portion slopes down to a lower surface portion and continues inwardly to an upstanding circular wall which bounds the upstanding tubular hub portion of the sealing member. An electrically conductive metallic member extends through the tubular hub portion in the seal and the upstanding wall portion of the inner cover. A moisture tight seal between the electrically conductive member and the hub of the sealing member is maintained by the ability of the cover's upstanding wall to resist the compressive forces that are created when the rivet is peened. The conductive metal member forms a terminal for the cell and can make electrical contact with a bottom cover which forms the cell's external terminal.

Thus, in an alternative aspect, the present invention provides a cover for the open end of a container used to retain the several components of a galvanic cell comprising:
a member of substantially the same outer configuration as the inner configuration of the container and having a substantially flat surface portion extending inwardly from a configured edge portion, the substantially flat surface portion bounding a depressed portion which surrounds an upstanding wall portion about an aperture in the member.

The cover may be such that the configured edge portion has a first portion of the edge extending downwardly from the substantially flat surface portion contiguous with an adjacent upwardly turned second portion of the edge.

The depressed portion of the cover may be substantially surrounded by a vertically inclined portion leading up to the substantially flat surface portion.

The cover of the invention may be such that the member has a circular outer configuration, or has a polygonal configuration.

The cover may have a peripheral edge configured to substantially mate with the walls of the open end in the container to be closed by the member.

A cover may advantageously be provided wherein the member has at least one aperture therein for the passage of air into the galvanic cell.

The covers may preferably be an inner cover for the galvanic cell.

In a further aspect, there is provided an improved galvanic cell comprising:
a container for holding the active components of a galvanic cell and for forming an external electrode for the galvanic cell;
an electrically non-conductive sealing member for one end of the metal container, the sealing member having an up-standing tubular hub portion and an upstanding peripheral skirt portion for contacting the interior of the metal container;
a cover member for sealing the galvanic cell, the cover member having a reverse curved peripheral portion for compressing the upstanding skirt portion of the sealing member against the inner wall of the container and an upstanding annular portion for compressing against the upstanding tubular hub portion on the sealing member; and
a metallic conductive member extending through the tubular hub portion in the seal and the upstanding annular portion of the cover member and being sealed in place by the tubular hub portion of the sealing member and the upstanding annular portion of the cover member, the metallic conductive member forming a second terminal for the galvanic cell.

The cover member of the cell may have at least one aperture therein to allow the passage of air into the galvanic cell.

The cover member may have a substantially flat surface portion extending inwardly from the edge portion, the substantially flat surface portion bounding a depressed portion which surrounds the upstanding annular portion, especially wherein the substantially flat surface portion of the cover member has a reverse curved peripheral portion having a downwardly turned portion in surface contact with an adjacent upwardly turned portion which terminates in an edge.

The substantially flat surface portion of the cover member may have a sloping surface portion leading downwardly to the depressed portion of the member.

It is preferred that the cover member tends to bow upwardly near the sloping surface portion when in place in the container.

It is also preferred that the metallic conductive member is a metal fastener, especially a rivet, and the upstanding tubular hub portion of the sealing member has its exposed edge portion rolled or "mushroomed" when the fastener is fixed in position.

Thus, an aspect of the invention may be considered as follows. There is provided a cover for a galvanic cell having a reverse curved peripheral edge and a substantially centrally disposed upstanding wall bounding an aperture. A sealing member is positioned below the cover and has a tubular hub which projects through the aperture in the cover and a skirt that electrically insulates the edge of the cover. An electrically conductive fastener is positioned in the tubular hub on the sealing member which tends to cause the edge of the tubular hub to roll or "mushroom" when the electrically conductive fastener is peened or clinched in place. The rolled tubular hub tightly locks the fastener and the cover together while the edge of the cover presses against the inner wall of the container holding the components of the galvanic cell. The pressure tends to slightly bow the cover enabling it to stay in a tightly sealed condition under both physical and thermal stress. A galvanic cell incorporating the cover is also provided.

The invention will be further illustrated with respect to the accompanying drawings, in which:
Fig. 1 is a sectional view of a galvanic cell incorporating the improved inner cover;
Fig. 2 is a partial sectional view showing the inner cover of Fig. 1 partially bowed;
Fig. 3 is a top plan view of the inner cover; and
Fig. 4 is a sectional view taken on the line 4-4 of Fig. 3.

Where specific materials are stated in the following description of the drawings, these represent preferred materials only.

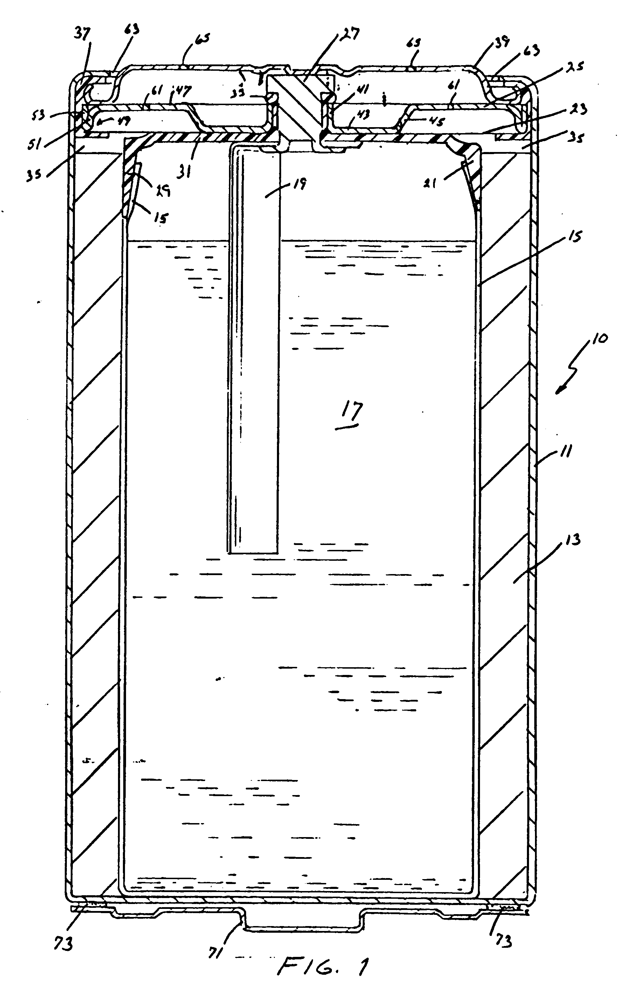

Referring to Fig. 1, an air-assisted alkaline cell is shown and indicated generally by the number 10. The cell is assembled in a conventional conductive steel container 11 which also forms an external terminal for the cell. The cathode for the cell 13 comprises manganese dioxide and is formed about the inner wall of the container 11. After the cathode 13 is in place in the steel container, a separator 15 is added to electrically isolate the anode material 17 from the cathode and the container while still permitting ion transport between the electrodes.

The anode material 17 comprises a mixture of zinc powder, a gel forming binder and the liquid electrolyte used in the cell. The electrolyte is preferably a high strength, 35% to 40% by weight, aqueous solution of potassium hydroxide. The open end of the can 11 is closed by a seal assembly comprising a current collector 19, a seal 21, an air permeable membrane 23, an inner cover 25 and a fastener, preferably a rivet 27 which is used to join together the several pieces of the assembly. The rivet is preferably made of brass.

The collector 19 can be made of brass and can be in the form of an elongated pin or nail or preferably in the form of an elongated arcuate member. The seal 21 is made of an organic polymeric material which is compatible with the several components of the cell. The seal 21 is preferably made of polypropylene in view of its compatibility with strong aqueous alkaline solutions.

The seal 21 has a depending wedge-like skirt 29, which on assembly contacts the cathode 13 and moves the separator 15 away from the cathode as shown in the Figure 1, protecting the zinc anode material 17 from atmospheric oxygen which could react with the zinc and render a portion of the zinc unavailable for the electrochemical reaction.

The seal 21 has a substantially flat bottom portion 31 surrounding an upstanding tubular hub portion 33. The seal has a plurality of spaced air passages 35 through which air can pass to contact the manganese dioxide cathode to recharge the cathode material. A wall portion 37 extends upwardly from the edge of the seal 21. The wall portion 37 would normally be used to insulate the inner cover 25 and the yet to be added bottom cover from the can 11.

A membrane 23 fits within the area of the seal member 21 bounded by the wall 37. The membrane is made of two layers of Teflon (registered Trade Mark). One layer is a non-woven film and the other is a mesh. The two layers can be heat sealed together and form an air permeable membrane for the cell. The membrane 23 can be fastened to the bottom portion 31 of the seal 21 by welding. A fatty polyamide adhesive such as the type disclosed in US-A-3,922,178 can be used to back up the weld and to prevent electrolyte creep between the polypropylene seal and the microporous gasket. Two beads of the adhesive are advantageously used. One bead is placed around the top periphery of the seal bottom 31 where it joins the inside of the wall 37. The second bead can be placed on the top of seal bottom 31 where it joins the outer wall of the tubular hub 33.

The inner cover is commonly referred to as a neutral cover as such a part is electrically neutral in most cell constructions. However, in this particular cell construction, it is in physical and electrical contact with the finished cell bottom cover. The inner cover 25 can be made of a polymeric material or metal, preferably stainless steel, and has an inner upstanding wall member 41 in contact with the tubular hub 33 of the seal 21 and is used to compress the seal against the rivet 27. The peripheral edge of the inner cover is preferably of the same configuration as the inner edge of the container, so it can be circular, square or rectangular, for example, in order to provide a leak-tight seal. The metal cover is preferably prepared using metal stamping techniques. The depressed portion of the inner cover can be prepared by embossing.

Referring again to the inner cover 25, it can be seen that the cover extends outwardly from the upstanding wall portion 41. Extending away from the inner edge 41, the inner cover is in contact with the upper surface of the seal 21 along the portion 43. The portion 43 is bounded by an inclined wall portion 45, which extends upwardly to a substantially flat surface portion 47, which extends outwardly to the edge of the seal member 37 which is in contact with the inner wall of the can 11. The inner cover has a reverse curved portion 49 (Figs. 1 and 4) made up of a downwardly turned portion 51 which is in contact with an upwardly turned edge 53 to form a reinforced hoop about the peripheral edge of the inner cover.

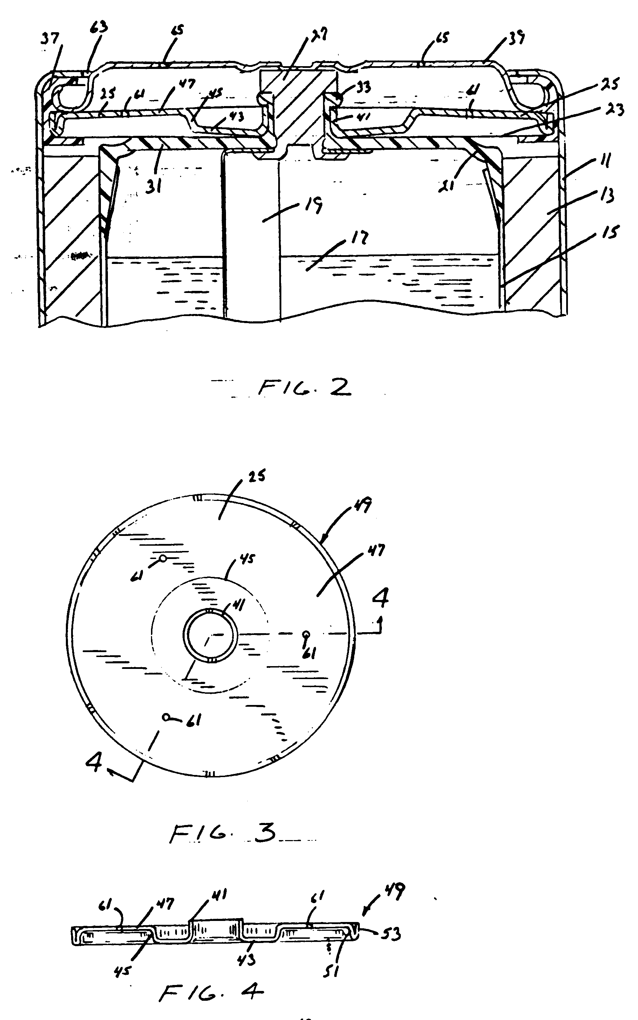

For use in an air assisted alkaline cell, the inner cover 25 should have air passages to allow air to enter the cell. Referring to Fig. 3, it can be seen that the inner cover has three apertures 61 spaced approximately 120° apart. When the inner cover is used in non-air assisted cells it does not need three apertures although one or more can be used as vents for a cell.

To complete assembly of the cell, a bottom cover 39 is placed into the steel container 11 and is also isolated from contact with the container by the wall portion 37 of the seal 21. The bottom cover 39 makes electrical contact with the rivet 27, or other suitable electrically conductive means, enabling the bottom cover 39 to become the second external terminal for the cell. The edge of the steel container 11, and of the edge 37 of the seal 21 are then rolled to hold the bottom cover 39 locked in position on the bottom of the cell. A gap 63 surrounds the bottom cover 39, separating it from contact with the container 11. The bottom cover 39 preferably contains three small apertures 65, two of which are shown in Fig. 1, spaced approximately 120° apart which provide a passage for air to enter into the bottom of the cell. The top cover 71 can be fastened to the container 11 by welds 73 after the cathode is rammed into place. It can be added before or after this step as it is merely attached to the container.

In the air assisted alkaline cell, air can pass through an aperture 65 in the bottom cover 39 and through an aperture 61 in the inner cover 25 through the air permeable membrane 23 and then through an air passage 35 in the seal 21 to reach the cathode material 13. After the cell is assembled, referring to Fig. 2, the inner cover 25 is preferably bowed in the vicinity of the vertically inclined wall portion 45 and the depressed portion 43 tends to rise from the surface of the centre portion 31 of the seal 21. The bowing is a result of the strength of the inner cover and tight fit of the inner cover against the upstanding edge 37 of the seal 21. The inner cover 25 also maintains a constant pressure against the seal about the rivet 27 and the edge of the can 11 to resist leakage of electrolyte material from the cell.

The extended hub portion 33 of seal member 21 tends to roll or "mushroom" over the top edge of the wall 41 of inner cover 25 when the rivet 27 is peened or clinched in the assembly process. The rolled edge of the hub portion 33 tends to hold the seal hub 33 in place relative to the upstanding wall 41, preventing movement between the two pieces. The mushroom shape also prevents the rivet 27 from moving if the cell is dropped. The height of the rivet is maintained and electrical contact is maintained between the rivet and the external electrode 39 even under physical stress. In cells not equipped with the inner cover of the present invention, a drop of the cell onto its bottom cover can drive the rivet into the cell separating the electrical connection between the rivet and the bottom cover.

Thus, an improved cover is provided for galvanic cells. The cover not only provides improved leak resistance for the cell, but also provides a measure of both thermal and mechanical shock protection. A galvanic cell produced using the cover of the present invention would also have these improved characteristics.

## Claims

1. A galvanic cell comprising a conductive container containing the active materials, a non-conductive seal (21) located in an open end of the container to retain the active materials, a conductive member (27) extending through the seal to provide the terminal opposite to that provided by the container, characterised in that a flange of the seal extends away from the active materials about the conductive member, and/or a flange of the seal extends about the interior periphery of the container toward the open end thereof, a resiliently deformable collar (25) being provided about the member and resilient deformation of the collar acting on at least one extending flange, preferably by means of a suitable wall on the collar, to bias the flange against the member or container as appropriate.

2. A cell according to claim 1, wherein the seal has a flange both about the conductive member and the interior periphery of the container, and wherein the collar acts against both flanges.

3. A cell according to any preceding claim, wherein cell is an air-assisted cell, appropriate holes being provided in seal and collar, there being preferably three holes in the collar substantially evenly distributed.

4. A cell according to any preceding claim, wherein the periphery of the collar is recurved.

5. A cell according to claim 4, wherein the recurvature is such that the periphery of the collar is doubled back into contact with itself and is substantially perpendicular to the general plane of the collar.

6. A cell according to any preceding claim, wherein the collar has a depression about the conductive member.

7. A cell according to claim 6, wherein the radial section of the collar is substantially step-like, with the transition between the faces which define the depression and the remainder of the collar forming an acute angle.

8. A cell according to any preceding claim, wherein the collar is metal, preferably stainless steel.

9. A cell according to any preceding claim, wherein the conductive member is a metal fastener, preferably a rivet, the seal comprising a flange about the fastener, and whereby, when the member is fastened in position, the flange is compressed such that a part of the flange is forced outwards and over the inner periphery of the collar, preferably preventing any axial movement of the collar.

10. A resiliently deformable collar as defined in any preceding claim, which in use acts by resilient deformation on an extending flange of a seal, the seal forming a component of a galvanic cell, preferably by means of a suitable wall on the collar, to provide a biassing action of the flange against a conductive member about which the flange of the seal extends on its cell container.

## Patentansprüche

1. Galvanische Zelle mit einem leitfähigen Behälter, der aktive Materialien enthält, einer nichtleitenden Dichtung (21), die in einem offenen Ende des Behälters angeordnet ist, um die aktiven Materialien zurückzuhalten, einem leitfähigen Glied (27), das durch die Dichtung hindurchgeht, um den zum Behälter entgegengesetzten Anschluß zu bilden, dadurch gekennzeichnet, daß sich ein Flansch der Dichtung auf der von den aktiven Materialien abgewandten Seite rund um das leitfähige Glied erstreckt und/oder daß sich ein Flansch der Dichtung rund um den inneren Umfang des Behälters zu seinem offenen Ende hin erstreckt, daß eine elastisch verformbare Manschette (25) um das Glied herum angebracht ist und die elastische Verformung der Manschette auf mindestens einen vorstehenden Flansch wirkt, vorzugsweise mittels einer geeigneten Wand an der Manschette, um den Flansch gegen das Glied bzw. gegen den Behälter vorzuspannen.

2. Zelle nach Anspruch 1, wobei die Dichtung sowohl um das leitfähige Glied als auch um den inneren Umfang des Behälters herum einen Flansch aufweist, und wobei die Manschette auf beide Flansche wirkt.

3. Zelle nach irgendeinem der vorstehenden Ansprüche, wobei es sich um eine von Luft gestützte Zelle handelt, in deren Dichtung und Manschette geeignete Bohrungen angebracht sind, wobei vorzugsweise drei Bohrungen im wesentlichen gleichmäßig in der Manschette verteilt sind.

4. Zelle nach irgendeinem der vorstehenden Ansprüche, wobei der äußere Rand der Manschette zurückgebogen ist.

5. Zelle nach Anspruch 4, wobei die Rückbiegung so ausgeführt wird, daß der äußere Rand der Manschette gefalzt und doppelt übereinandergelegt wird und im wesentlichen senkrecht zur Hauptebene der Manschette steht.

6. Zelle nach irgendeinem der vorstehenden Ansprüche, wobei die Manschette um das leitfähige Glied herum eine Vertiefung aufweist.

7. Zelle nach Anspruch 6, wobei der radiale Schnitt der Manschette im wesentlichen stufenartig ist und der Übergang zwischen den Flächen, welche die Vertiefung begrenzen, und dem Rest der Manschette einen spitzen Winkel bildet.

8. Zelle nach irgendeinem der vorstehenden Ansprüche, wobei die Manschette aus Metall, vorzugsweise aus rostfreiem Stahl besteht.

9. Zelle nach irgendeinem der vorstehenden Ansprüche, wobei das leitfähige Glied ein Metallbefestigungsmittel ist, vorzugsweise ein Niet, wobei die Dichtung einen um das Befestigungsmittel herumgehenden Flansch aufweist, wodurch beim Einsetzen des Gliedes der Flansch so zusammengedrückt wird, daß ein Teil des Flansches nach außen und über den inneren Rand der Manschette gedrückt wird, so daß vorzugsweise eine etwaige Axialverschiebung der Manschette verhindert wird.

10. Elastisch verformbare Manschette nach irgendeinem der vorstehenden Ansprüche, die im Gebrauch, vorzugsweise mittels einer geeigneten Wand an der Manschette, durch elastische Deformation auf einen vorstehenden Flansch einer Dichtung wirkt, die ein Bauteil einer galvanischen Zelle bildet, so daß der Flansch gegen ein leitfähiges Glied vorgespannt wird, um welches der Dichtungsflansch an seinem Zellenbehälter herumgelegt ist.

## Revendications

1. Une cellule galvanique comprenant un conteneur conducteur contenant les matériaux actifs, un joint d'étanchéité non conducteur (21), agencé dans une extrémité ouverte du conteneur, pour retenir les matériaux actifs, un élément conducteur (27) s'étendant à travers le joint d'étanchéité pour constituer la borne opposée à celle constituée par le conteneur, caractérisée en ce qu'une bride du joint d'étanchéité s'étend en s'écartant des matériaux actifs autour de l'élément conducteur, et/ou en ce qu'une bride du joint d'étanchéité s'étend sur la périphérie interne du conteneur en direction de l'extrémité ouverte correspondante, un collet à déformation élastique (25) étant agencé au niveau de l'élément et la déformation élastique du collet agissant sur au moins une bride d'extension, de préférence par l'intermédiaire d'une paroi appropriée sur le collet, pour pousser la bride contre l'élément ou le conteneur, en fonction des besoins.

2. Une cellule selon la revendication 1, dans laquelle le joint d'étanchéité comporte une bride tant au niveau de l'élément conducteur que sur la périphérie interne du conteneur, et dans laquelle le collet agit contre les deux brides.

3. Une cellule selon l'une quelconque des revendications précédentes, dans laquelle la cellule est une cellule assistée par l'air, des trous appropriés étant pratiqués dans le joint d'étanchéité et le collet, trois trous étant pratiqués de préférence dans le collet et ces trous étant répartis de façon pratiquement régulière.

4. Une cellule selon l'une quelconque des revendications précédentes, dans laquelle la périphérie du collet est recourbée.

5. Une cellule selon la revendication 4, dans laquelle la recourbure est telle que la périphérie du collet est repliée vers l'arrière et mise en contact avec elle-même, étant pratiquement perpendiculaire au plan général du collet.

6. Une cellule selon l'une quelconque des revendications précédentes, dans laquelle le collet comporte une dépression au niveau de l'élément conducteur.

7. Une cellule selon la revendication 6, dans laquelle la section radiale du collet est pratiquement en forme de gradins, la transition entre les faces définissant la dépression et le reste du collet formant un angle aigu.

8. Une cellule selon l'une quelconque des revendications précédentes, dans laquelle le collet est en métal, de préférence en acier inoxydable.

9. Une cellule selon l'une quelconque des revendications précédentes, dans laquelle l'élément conducteur est une attache métallique, de préférence un rivet, le joint d'étanchéité comprenant une bride sur l'attache, et, l'élément étant fixé en position, la bride étant comprimée de sorte qu'une partie de la bride est forcée vers l'extérieur et au-dessus de la périphérie interne du collet, empêchant de préférence tout mouvement axial du collet.

10. Un collet à déformation élastique selon l'une quelconque des revendications précédentes, agissant en service par déformation élastique sur une bride en extension d'un joint d'étanchéité, le joint d'étanchéité constituant un composant d'une cellule galvanique, de préférence par l'intermédiaire d'une paroi appropriée sur le collet, pour entraîner une action de pression de la bride, exercée contre un élément conducteur sur lequel la bride du joint d'étanchéité s'étend sur le conteneur de la cellule.
